# EUROPÄISCHE PATENTSCHRIFT

(11) **EP 3 472 544 B1**
(45) Veröffentlichungstag und Bekanntmachung des Hinweises auf die Patenterteilung: **11.03.2020**
(21) Anmeldenummer: 17731136.2
(22) Anmeldetag: 19.06.2017
(51) Int. Cl.: F27B 7/20, C04B 7/43, C04B 7/44, F23K 3/20, F23G 5/44, F23C 99/00, F23K 3/00, F23K 3/22

(54) **VORRICHTUNG UND VERFAHREN ZUR WÄRMEBEHANDLUNG VON MINERALISCHEM GUT**
DEVICE AND METHOD FOR THE HEAT TREATMENT OF MINERAL MATERIALS
DISPOSITIF ET PROCÉDÉ DE TRAITEMENT THERMIQUE D'UN PRODUIT MINÉRAL

(30) Priorität: 21.06.2016 DE 102016111291
(43) Veröffentlichungstag der Anmeldung: 24.04.2019
(73) Patentinhaber: thyssenkrupp Industrial Solutions AG, 45143 Essen (DE); thyssenkrupp AG, 45143 Essen (DE)
(72) Erfinder: SCHEFER, Dirk, 59320 Ennigerloh (DE); ZÜHLSDORF, Samuel, 48151 Münster (DE); FRIE, Sebastian, 48165 Münster (DE)
(74) Vertreter: thyssenkrupp Intellectual Property GmbH
(86) Internationale Anmeldenummer: PCT/EP2017/064864
(87) Internationale Veröffentlichungsnummer: WO 2017/220456

(56) Entgegenhaltungen:
- WO-A1-2015/036361
- DE-B4-102010 008 785
- DE-C- 802 825
- GB-A- 2 074 139
- US-A- 4 174 920

## Beschreibung

Die Erfindung betrifft eine Vorrichtung und ein Verfahren zur Wärmebehandlung von mineralischem Gut mit einem Flugstromreaktor zum Vorwärmen und/oder Kalzinieren des mineralischen Gutes, wobei an den Flugstromreaktor wenigstens eine Brennkammer angeschlossen ist, die ein Brennstoff-Aufgabesystem zum Zuführen von Brennstoff in die Brennkammer aufweist.

In der Zement- und Mineralsindustrie werden enorme Wärmemengen für die Wärmebehandlung des mineralischen Gutes benötigt. Ein Teil der Wärmebehandlung erfolgt dabei oftmals in einem Flugstromreaktor, in dem das zu behandelnde mineralische Gut von einem heißen Gasstrom mitgerissen wird, wobei es während der Verweilzeit im Flugstromreaktor zu einem Wärmeaustausch zwischen dem Gas und dem mineralischen Gut kommt, sodass das mineralische Gut vorgewärmt und/oder kalziniert wird. Der erforderliche Heißgasstrom wird beispielsweise durch die Abgase eines an den Flugstromreaktor angeschlossenen Ofens und/oder durch Verbrennung von Brennstoff im Flugstromreaktor bereitgestellt. Aus der DE 10 2012 022 179 A1 und der DE 10 2010 008 785 B4 sind außerdem zusätzliche Brennkammern bekannt, die an den Flugstromreaktor angeschlossen sind und zur Verbrennung von meist minderwertigen Brennstoffen (Sekundär- bzw. Ersatzbrennstoffe) dienen.

Aus der WO 2015/036361 A1 ist eine an einen Flugstromreaktor angeschlossene, zusätzliche Brennkammer bekannt, die über zwei beabstandete Brennstofföffnungen mit Abfallbrennstoff bestückt wird, der auf zugehörigen Auflageflächen zu liegen kommt. Gemäß der US 4 174 920 A ist ein hin- und herbewegliches Brennstoffeintragsorgan vorgesehen, um den Brennstoff auf mehrere Schurren zu verteilen. Des Weiteren ist aus der DE 802 825 C eine pendelnde Beschickungseinrichtung für mechanische Feuerungen bekannt.

Um den Einsatz von Ersatzbrennstoffen bei der Wärmebehandlung von mineralischem Gut zu erhöhen, werden diese Brennkammern immer größer ausgebildet. So sind bereits Brennkammern mit Umsatzleistungen von mehr als 10 t Brennstoff pro Stunde realisiert worden.

Man hat jedoch in der Praxis festgestellt, dass der Brennstoff in sehr großen Brennkammern oftmals nicht vollständig umgesetzt wird.

Der Erfindung liegt daher die Aufgabe zugrunde, die Umsetzung des Brennstoffs in der an den Flugstromreaktor angeschlossenen Brennkammer zu verbessern.

Erfindungsgemäß wird diese Aufgabe durch die Merkmale der Ansprüche 1 und 14 gelöst.

Bei der erfindungsgemäßen Vorrichtung zur Wärmebehandlung von mineralischem Gut ist ein Flugstromreaktor zum Vorwärmen und/oder Kalzinieren des mineralischen Gutes vorgesehen, wobei am Flugstromreaktor wenigstens eine Brennkammer mit einer Auflagefläche für Brennstoff angeschlossen ist, die ein Brennstoff-Aufgabesystem zum Zuführen von Brennstoff in die Brennkammer aufweist. Dieses Brennstoffs-Aufgabesystem weist zur gleichmäßigen Verteilung des Brennstoffs über die Breite der Aufgabefläche wenigstens zwei beabstandete, in der Brennkammer mündende Brennstoff-Zuführöffhungen oder wenigstens ein hin- und herbewegliches Brennstoff-Eintragsorgan auf.

Beim erfindungsgemäßen Verfahren zur Wärmebehandlung von mineralischem Gut wird dieses in einem Flugstromreaktor vorgewärmt und/oder kalziniert, wobei die hierfür erforderliche Wärme wenigstens teilweise in wenigstens einer an den Flugstromreaktor angeschlossenen Brennkammer durch Umsetzung von Brennstoff erzeugt wird, wobei der Brennstoff über ein Brennstoff-Aufgabesystem der Brennkammer zugeführt wird. Der Brennstoff wird dabei über wenigstens zwei beabstandet voneinander in der Brennkammer mündende Brennstoff-Zuführöffnungen oder wenigstens ein hin- und herbewegliches Brennstoff-Eintragsorgan der Brennkammer gleichmäßig verteilt über die Breite einer Aufgabefläche in die Brennkammer eingebracht wird.

Herkömmlicherweise wird der Brennstoff über lediglich eine Zuführöffnung der Brennkammer zugeführt. Meist ist in der Brennkammer eine Auflagefläche, (insbesondere ein Auflagerost) vorgesehen, auf welcher der Brennstoff umgesetzt wird. Der Brennstoff wird dabei von seiner Aufgabestelle bis zum Ende der Brennkammer transportiert/gefördert. Etwaige Brennstoffreste werden dann in den Flugstromreaktor ausgetragen. Für eine möglichst gleichmäßige Umsetzung/Veraschung des Brennstoffs muss dieser in einer möglichst gleichmäßigen Schicht in die Brennkammer eingebracht werden. Mit zunehmender Größe der Brennkammer gestaltet sich dies jedoch immer schwieriger.

Mit der erfindungsgemäßen Lösung, bei welcher der Brennstoff an wenigstens zwei beabstandeten Stellen oder durch ein sich hin- und herbewegendes Brennstoff-Eintragsorgan der Brennkammer aufgegeben wird, kann der Brennstoff gleichmäßig verteilt über die Breite einer Aufgabefläche in die Brennkammer eingebracht werden. Eine gleichmäßige Brennstoffschicht ermöglicht auch eine effiziente Umsetzung des Brennstoffs, sodass die Umwandlung bzw. Veraschung des Brennstoffs im Wesentlichen in der Brennkammer abgeschlossen wird.

Weitere Ausgestaltungen der Erfindung sind Gegenstand der weiteren Ansprüche.

Gemäß einem bevorzugten Ausführungsbeispiel weist das Brennstoff-Aufgabesystem ein zentrales Brennstoff-Transportsystem und wenigstens ein nachfolgend angeordnetes Verteilorgan (beispielsweise ein Materialsplitter) auf, wobei das Verteilorgan mit den wenigstens zwei beabstandeten, in der Brennkammer mündenden Brennstoff-Zuführöffhungen in Verbindung steht. Die Brennkammer weist vorzugsweise eine Auflagefläche für den Brennstoff auf, die horizontal oder geneigt ausgebildet ist. Des Weiteren kann das Brennstoff-Aufgabesystem Leitelemente zum verteilten Aufgeben des Brennstoffs über die Breite der Auflagefläche aufweisen.

Gemäß einer anderen Ausgestaltung der Erfindung kann das Brennstoff-Aufgabesystem einen Verteilerkasten umfassen, wobei die Brennstoff-Zuführöffnungen durch mehrere über die Breite der Auflagefläche verteilte Auslässe des Verteilerkastens gebildet werden. Das wenigstens eine hin- und herbewegliche Brennstoff-Eintragsorgan kann beispielsweise durch einen verfahrbaren Aufgabeschacht oder eine verfahrbare oder verschwenkbare Fördereinrichtung gebildet werden. Des Weiteren kann das Aufgabesystem wenigstens ein Dosierorgan, beispielsweise eine Förderschnecke, zum dosierten und/oder verteilten Aufgeben des Brennstoffs umfassen.

Außerdem kann das Brennstoff-Aufgabesystem wenigstens einen Aufgabeschacht umfassen, der mit einer Füllstands-Messeinrichtung zur Regelung der Materialhöhe im Aufgabeschacht in Verbindung steht. Auf diese Weise wird gewährleistet, dass immer ein ausreichender Brennstoffvorrat vorhanden ist, um den kontinuierlichen Betrieb sicherzustellen. Des Weiteren ist es zweckmäßig, wenn wenigstens eine Messeinrichtung zur Überwachung der Breite und/oder Höhe einer sich auf der Auflagefläche der Brennkammer ausbildenden Schicht des aufgegebenen Brennstoffs vorgesehen ist.

Gemäß einer weiteren Ausgestaltung der Erfindung soll die Leistung der Brennkammer mehr als 70MW, vorzugsweise mehr als 120 MW und höchstvorzugsweise mehr als 160 MW betragen. Die Durchsatzleistung des Flugstromreaktors kann insbesondere mehr als 5.500 t, vorzugsweise mehr als 7.500 t und höchstvorzugsweise mehr als 10.000 t an mineralischem Gut pro Tag betragen. Weiterhin kann die Auflagefläche für den Brennstoff wenigstens 40m², vorzugsweise wenigstens 50m² und höchstvorzugsweise wenigstens 60m² betragen. Die Umsatzleistung der Brennkammer wird insbesondere mit mehr als 15 t, vorzugsweise mehr als 18 t, höchstvorzugsweise mehr als 20 t Brennstoff pro Stunde konzipiert.

Des Weiteren kann die Brennkammer mit Mitteln zum Transport des Brennstoffs oder dessen Rückstände über die Auflagefläche und/oder zum Austrag der Rückstände des Brennstoffs in den Flugstromreaktor ausgestattet werden.

Weiterhin ist vorgesehen, dass der Brennstoff den wenigstens zwei Brennstoff-Zuführöffnungen dosiert, beispielsweise über Förderschnecken, zugeführt wird. Ferner kann der über das Brennstoff-Aufgabesystem zugeführte Brennstoff und/oder eine sich auf einer Auflagefläche der Brennkammer ausbildende Schicht aus Brennstoff mittels wenigstens einer Messeinrichtung überwacht werden, so dass ein von der wenigstens einen Messeinrichtung ermittelter Messwert zur Steuerung der Aufgabe des Brennstoffs für eine gleichmäßige Verteilung des Brennstoffs über die Breite der Auflagefläche verwendet wird.

Weitere Vorteile und Ausgestaltungen der Erfindung werden anhand der nachfolgenden Beschreibung einiger Ausführungsbeispiele näher erläutert.

In der Zeichnung zeigen:
- Fig. 1:: eine schematische Darstellung einer Vorrichtung zur Wärmebehandlung von mineralischem Gut,
- Fig. 2:: eine schematische Darstellung eines Brennstoffs-Aufgabesystems gemäß einem ersten Ausführungsbeispiel,
- Fig. 3:: eine schematische Darstellung eines Brennstoffs-Aufgabesystems gemäß einem zweiten Ausführungsbeispiel,
- Fig. 4:: eine schematische Darstellung eines Brennstoffs-Aufgabesystems gemäß einem dritten Ausführungsbeispiel,
- Fig. 5:: eine schematische Darstellung eines Brennstoffs-Aufgabesystems gemäß einem vierten Ausführungsbeispiel,
- Fig. 6:: eine schematische Darstellung eines Brennstoffs-Aufgabesystems gemäß einem fünften Ausführungsbeispiel,
- Fig. 7:: eine schematische Darstellung einer Vorrichtung zur Wärmebehandlung von mineralischem Gut gemäß einem weiteren Ausführungsbeispiel.

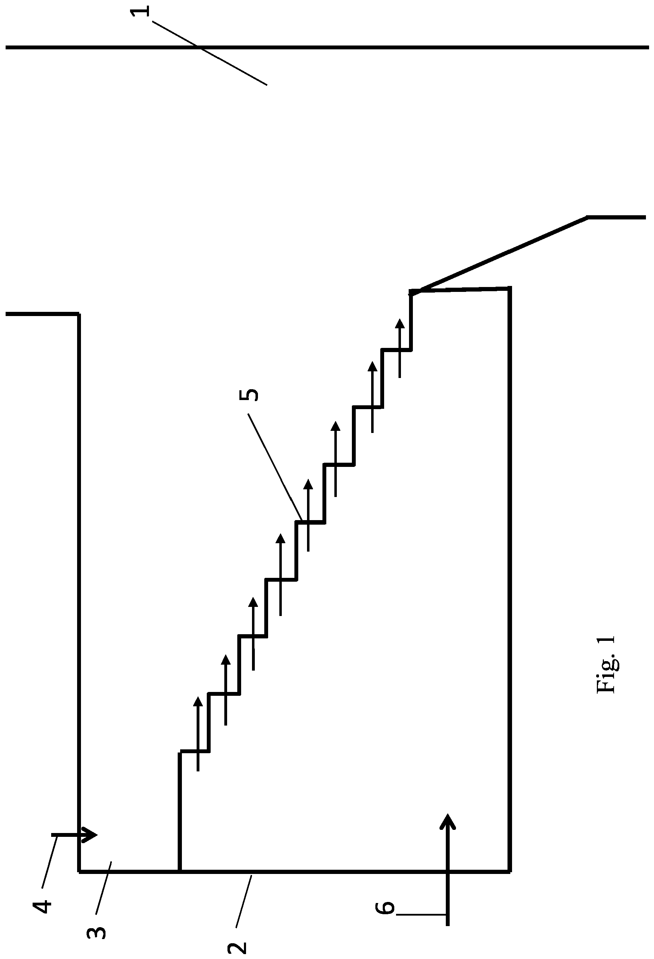

Die in Fig. 1 dargestellte Vorrichtung zur Wärmebehandlung von mineralischem Gut weist einen Flugstromreaktor 1 zum Vorwärmen und/oder Kalzinieren des mineralischen Gutes sowie eine an den Flugstromreaktor angeschlossene Brennkammer 2 auf, die ein Brennstoff-Aufgabesystem 3 zum Zuführen von Brennstoff 4 in die Brennkammer 2 vorsieht. Die Brennkammer weist ferner eine Auflagefläche 5 auf, die hier als Stufenrost ausgebildet ist und sich von dem Brennstoff-Aufgabesystem 3 bis zum Anschluss an den Flugstromreaktor 1 erstreckt. Die Auflagefläche 5 wird mit Verbrennungsluft 6 belüftet, wobei die Verbrennungsluft zum einen zur Umsetzung des Brennstoffs 4 und andererseits zur Förderung des Brennstoffs über die Auflagefläche dient. Die Verbrennungsluft transportiert den Brennstoff oder dessen Rückstände über die Auflagefläche 5 und/oder dient zum Austragen der Rückstände des Brennstoffs in den Flugstromreaktor 1. Alternativ können aber beispielsweise auch mechanische Transportmittel vorgesehen werden, indem die Auflagefläche beispielsweise als Schubrost ausgebildet ist.

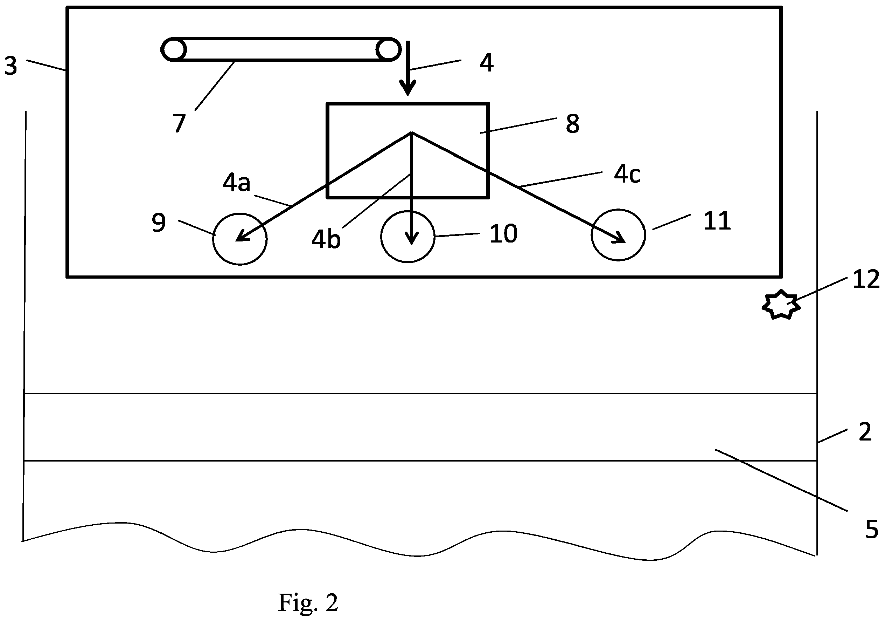

Fig. 2 zeigt ein Brennstoff-Aufgabesystem 3 gemäß einem ersten Ausführungsbeispiel, welches ein zentrales Brennstoff-Transportsystem 7 und wenigstens ein nachfolgend angeordnetes Verteilorgan 8 aufweist. Das Verteilorgan 8 ist beispielsweise als Materialsplitter ausgebildet, der den zugeführten Brennstoff 4 in zwei oder mehrere Teilströme 4a, 4b, 4c aufteilt und mit wenigstens zwei (hier drei) beabstandeten, in der Brennkammer mündenden Brennstoff-Zuführöffnungen 9, 10, 11 in Verbindung steht. Die Brennstoff-Zuführöffnungen sind über die Breite der Auflagefläche 5 verteilt angeordnet, sodass sich eine über die Breite der Auflagefläche 5 möglichst gleichmäßig verteilte Brennstoffschicht ausbildet. Eine in der Brennkammer angeordnete Messeinrichtung 12 dient zur Überwachung der sich ausbildenden Brennstoffschicht, wobei ein von der Messeinrichtung 12 ermittelter Messwert zur Steuerung der Aufgabe des Brennstoffs für eine gleichmäßige Verteilung des Brennstoffs über die Breite der Auflagefläche 5 verwendet wird.

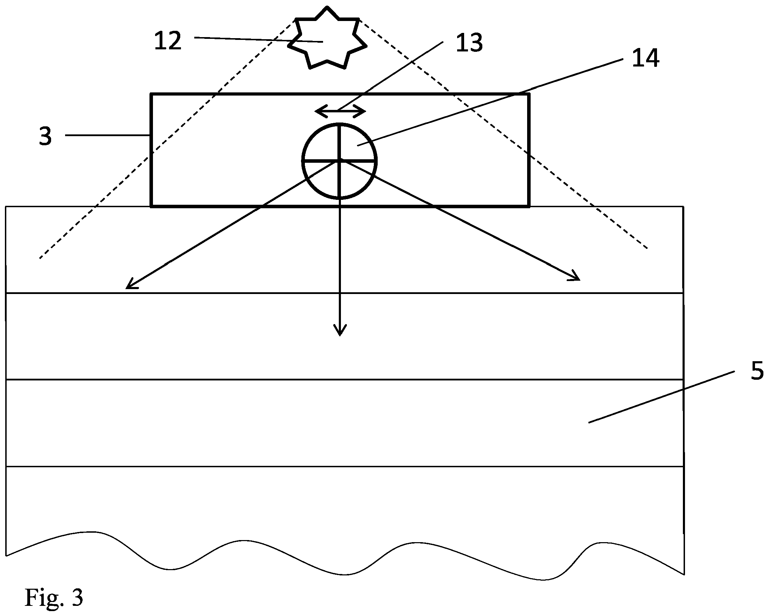

Das Ausführungsbeispiel gemäß Fig. 3 zeigt ein alternatives Brennstoff-Aufgabesystem 3, bei dem ein gemäß Doppelpfeil 13 hin- und herbewegliches Brennstoff-Eintragsorgan 14 vorgesehen ist. Auch auf diese Weise kann der Brennstoff gleichmäßig über die Breite der Auflagefläche 5 verteilt werden.

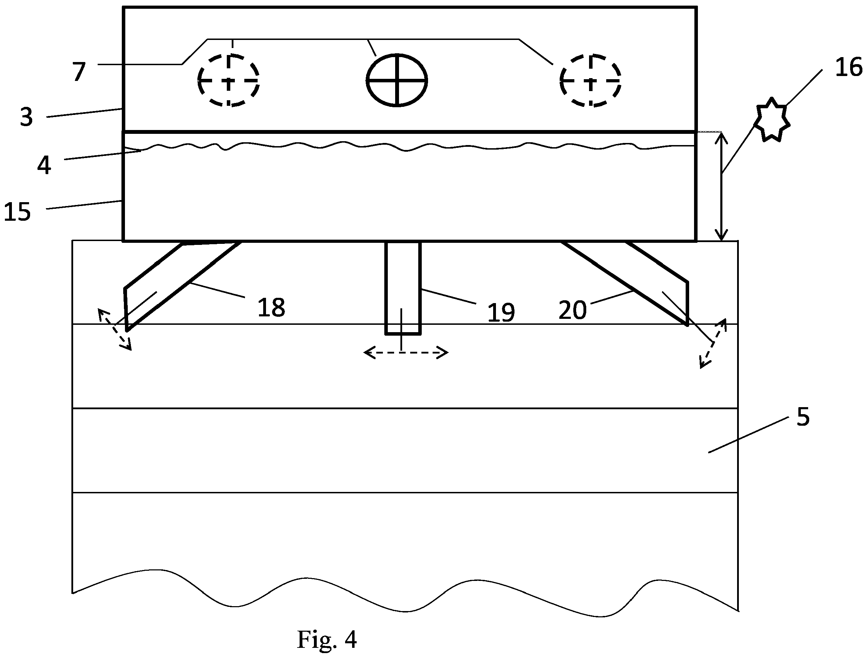

Die Fig. 4 zeigt ein Ausführungsbeispiel, bei dem das Brennstoff-Aufgabesystem 3 einen Aufgabeschacht 15 umfasst, der mit einer Füllstands-Messeinrichtung 16 zur Regelung der Materialhöhe im Aufgabeschacht 15 in Verbindung steht. Der Aufgabeschacht 15 wird über ein zentrales Brennstoff-Transportsystem 7, beispielsweise über Aufgabeschnecken, befüllt. Der Austrag des Brennstoffs 4 aus dem Aufgabeschacht 15 erfolgt über Brennstoff-Eintragsorgane 17, 18, 19, die über die Breite der Auflagefläche 5 verteilt angeordnet sind und optional auch hin- und herbeweglich ausgeführt sein können, um eine noch gleichmäßigere Verteilung des Brennstoffs auf der Auflagefläche zu bewirken.

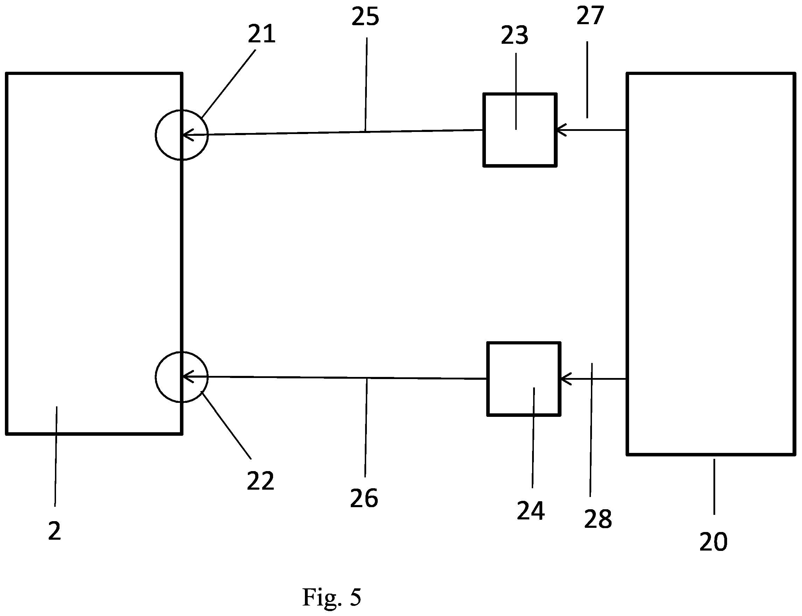

Fig. 5 zeigt den Transportweg zwischen einem Brennstofflager 20 und der Brennkammer 2 gemäß einem ersten Ausführungsbeispiel. Die Brennkammer 2 weist wiederum zwei über die Breite der Auflagefläche beabstandete Brennstoff-Zuführöffnungen 21, 22 auf, wobei die Brennstoff-Zuführöffnung 21 über eine Verbindungsleitung 25, ein Dosierorgan 23 und eine Verbindungsleitung 27 mit dem Brennstofflager 20 in Verbindung steht. Entsprechend ist auch die Brennstoff-Zuführöffnung 22 über eine Verbindungsleitung 26, ein Dosierorgan 24 und eine Verbindungsleitung 28 mit dem Brennstofflager 20 verbunden. Die Verbindungsleitungen sind vorzugsweise als Förderbänder ausgebildet. Dieses Ausführungsbeispiel hat den Vorteil, dass entsprechende Vorratsbehälter in Brennkammerhöhe vermieden werden, da der Brennstoff in Bodennähe dosiert der Brennkammer zugeführt wird. Auch in diesem Ausführungsbeispiel stehen die Brennkammer und/oder die Dosierorgane und/oder das Brennstofflager mit Mess- und/oder Überwachungseinrichtungen in Verbindung.

Die Dosierorgane 23, 24 können beispielsweise als Förderschnecken ausgebildet sein und ermöglichen eine mengenmäßig gleichmäßige Zuführung von Brennstoff über die beiden Brennstoff-Zuführöffnungen 21, 22. Selbstverständlich können aber auch mehr als zwei Brennstoff-Zuführöffhungen vorgesehen werden, um eine noch bessere Verteilung zu bewirken.

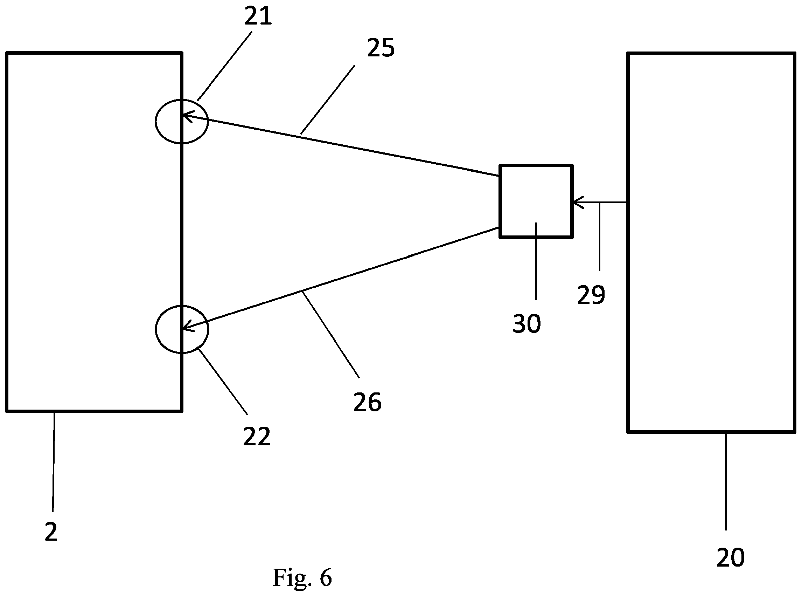

Im Ausführungsbeispiel gemäß Fig. 6 ist lediglich ein Dosierorgan 30 vorgesehen, das über eine Verbindungsleitung 29 mit dem Brennstofflager 20 in Verbindung steht. Es ist so ausgebildet, dass es wiederum gleiche Brennstoffmengen auf die Verbindungsleitung 25, 26 verteilt. Dies kann beispielsweise durch eine Doppelförderschnecke oder eine Förderschnecke in Verbindung mit einem Splitter bewirkt werden.

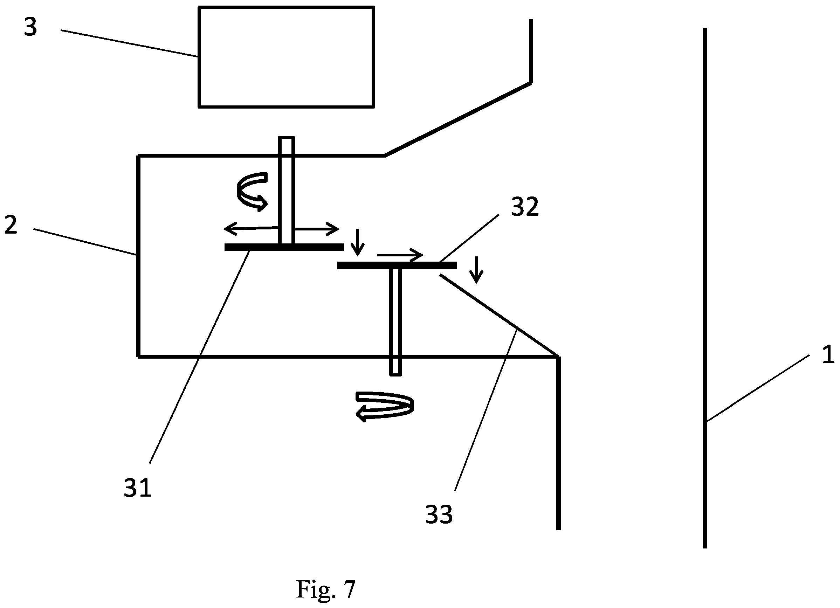

Das Ausführungsbeispiel gemäß Fig. 7 zeigt schließlich noch eine weitere Ausgestaltung der Auflagefläche für den Brennstoff in der Brennkammer 2. Hier wird die Auflagefläche durch eine erste drehende Scheibe 31 und eine nachfolgend angeordnete zweite drehende Scheibe 32 sowie einen Ablauffläche 33 abgebildet. Das Brennstoff-Aufgabesystem 3 ist wiederum so ausgestaltet, dass der Brennstoff an mehreren, beabstandeten Stellen auf die erste drehende Scheibe 31 aufgebracht wird. Der Transport des Brennstoffs erfolgt durch Fliehkraft von der ersten zur zweiten Scheibe bzw. von der zweiten Scheibe auf den Ablaufrost 33. Die Verweilzeiten des Materials auf den zwei Scheiben können eingestellt werden, sodass beispielsweise die Verweilzeit auf der ersten Scheibe größer ist als auf der zweiten Scheibe oder umgekehrt. Vorzugsweise werden beide Scheiben mit wenigstens annährend der gleichen Drehzahl betrieben, sodass die Verweilzeiten des Materials auf den Scheiben annährend gleich sind.

## Patentansprüche

1. Vorrichtung zur Wärmebehandlung von mineralischem Gut mit einem Flugstromreaktor (1) zum Vorwärmen und/oder Kalzinieren des mineralischen Gutes, wobei an den Flugstromreaktor (1) wenigstens eine Brennkammer (2) mit einer Auflagefläche (5) für Brennstoff (4) angeschlossen ist, wobei zur gleichmäßigen Verteilung des Brennstoffs über die Breite der Aufgabefläche ein Brennstoff-Aufgabesystem zum Zuführen des Brennstoffs (4) in die Brennkammer (2) vorgesehen ist, das wenigstens zwei beabstandete, in der Brennkammer (2) mündende Brennstoff-Zuführöffnungen (9-11; 21,22) oder wenigstens ein hin- und herbewegliches Brennstoff-Eintragsorgan (14) aufweist.

2. Vorrichtung nach Anspruch 1 **dadurch gekennzeichnet, dass** Brennstoff-Aufgabesystem (3) ein zentrales Brennstoff-Transportsystem (7) und wenigstens ein nachfolgend angeordnetes Verteilorgan (8) aufweist, wobei das wenigstens eine Verteilorgan (8) mit den wenigstens zwei beabstandeten, in der Brennkammer (2) mündenden Brennstoff-Zuführöffnungen in Verbindung steht.

3. Vorrichtung nach Anspruch 1, **dadurch gekennzeichnet, dass** die Leistung der Brennkammer (2) mehr als 70 MW beträgt.

4. Vorrichtung nach Anspruch 1, **dadurch gekennzeichnet, dass** die Durchsatzleistung des Flugstromreaktors (1) mehr als 5.500 t an mineralischem Gut pro Tag beträgt.

5. Vorrichtung nach Anspruch 1, **dadurch gekennzeichnet, dass** das Brennstoff-Aufgabesystem (3) Leitelemente zum verteilten Aufgeben des Brennstoffs (4) über die Breite der Auflagefläche (5) aufweist.

6. Vorrichtung nach Anspruch 1, **dadurch gekennzeichnet, dass** das Brennstoff-Aufgabesystem (3) einen Verteilerkasten umfasst und die Brennstoff-Zuführöffnungen durch mehrere über die Breite der Auflagefläche verteilte Auslässe des Verteilerkastens gebildet werden.

7. Vorrichtung nach Anspruch 1, **dadurch gekennzeichnet, dass** das wenigstens eine hin- und herbewegliche Brennstoff-Eintragsorgan (14) durch einen verfahrbaren Aufgabeschacht oder eine verfahrbare Fördereinrichtung gebildet wird.

8. Vorrichtung nach Anspruch 1, **dadurch gekennzeichnet, dass** das Brennstoff-Aufgabesystem (3) wenigstens einen Aufgabeschacht (15) umfasst, der mit einer Füllstands-Messeinrichtung (16) zur Regelung der Materialhöhe im Aufgabeschacht (15) in Verbindung steht.

9. Vorrichtung nach Anspruch 1, **dadurch gekennzeichnet, dass** wenigstens eine Messeinrichtung (12) zur Überwachung der Breite und/oder Höhe einer sich auf der Auflagefläche (5) der Brennkammer (2) ausbildenden Schicht des aufgegebenen Brennstoffs (4) vorgesehen ist.

10. Vorrichtung nach Anspruch 1, **dadurch gekennzeichnet, dass** das Brennstoff-Aufgabesystem (3) wenigstens ein Dosierorgan (23, 24) zum dosierten und/oder verteilten Aufgeben den Brennstoffs (4) umfasst.

11. Vorrichtung nach Anspruch 1, **dadurch gekennzeichnet, dass** die Auflagefläche (5) für den Brennstoff (4) wenigstens 40 m² beträgt.

12. Vorrichtung nach Anspruch 1, **dadurch gekennzeichnet, dass** die Umsatzleistung der Brennkammer (2) mehr als 15 t Brennstoff pro Stunde beträgt.

13. Vorrichtung nach Anspruch 1, **dadurch gekennzeichnet, dass** die Brennkammer (2) Transportmittel zum Transport des Brennstoffs oder dessen Rückstände über die Auflagefläche (5) und/oder zum Austrag der Rückstände des Brennstoffs in den Flugstromreaktor (1) aufweist.

14. Verfahren zur Wärmebehandlung von mineralischem Gut, wobei das mineralische Gut in einem Flugstromreaktor (1) vorgewärmt und/oder kalziniert wird und eine hierfür erforderliche Wärme wenigstens teilweise in wenigstens einer an den Flugstromreaktor (1) angeschlossenen Brennkammer (2) durch Umsetzung von Brennstoff (4) erzeugt wird, wobei der Brennstoff (4) über ein Brennstoff-Aufgabesystem (3) der Brennkammer (2) zugeführt wird, und
der Brennstoff (4) über wenigstens zwei beabstandet voneinander in der Brennkammer (2) mündende Brennstoff-Zuführöffnungen (9-11) oder wenigstens ein hin- und herbewegliches Brennstoff-Eintragsorgan (14) der Brennkammer (2) gleichmäßig verteilt über die Breite einer Aufgabefläche in die Brennkammer eingebracht wird.

15. Verfahren nach Anspruch 14, **dadurch gekennzeichnet, dass** der Brennstoff (4) den wenigstens zwei Brennstoff-Zuführöffnungen (21, 22) dosiert zugeführt wird.

16. Verfahren nach Anspruch 14, **dadurch gekennzeichnet, dass** der über das Brennstoff-Aufgabesystem (3) zugeführte Brennstoff (4) und/oder eine sich auf einer Auflagefläche (5) der Brennkammer (2) ausbildende Schicht aus Brennstoff (4) mittels wenigstens einer Messeinrichtung (12) überwacht wird und ein von der wenigstens einen Messeinrichtung ermittelter Messwert zur Steuerung der Aufgabe des Brennstoffs (4) für eine gleichmäßige Verteilung des Brennstoffs (4) über die Breite der Auflagefläche (5) verwendet wird.

## Claims

1. Device for the heat treatment of mineral material, having an entrained-flow reactor (1) for preheating and/or calcining the mineral material, wherein at least one combustion chamber (2) having a bearing surface (5) for fuel (4) is connected to the entrained-flow reactor (1), wherein, for the uniform distribution of the fuel over the width of the bearing surface, a fuel feed system for supplying the fuel (4) into the combustion chamber (2) is provided, which fuel feed system comprises at least two spaced-apart fuel supply openings (9-11; 21, 22), which open out in the combustion chamber (2), or at least one fuel introduction member (14), which is movable back and forth.

2. Device according to Claim 1, **characterized in that** the fuel feed system (3) comprises a central fuel transport system (7) and at least one distributing member (8) arranged downstream, wherein the at least one distributing member (8) is connected to the at least two spaced-apart fuel supply openings which open out in the combustion chamber (2).

3. Device according to Claim 1, **characterized in that** the power of the combustion chamber (2) is greater than 70 MW.

4. Device according to Claim 1, **characterized in that** the throughput capacity of the entrained-flow reactor (1) is greater than 5500 t of mineral material per day.

5. Device according to Claim 1, **characterized in that** the fuel feed system (3) comprises guide elements for the distributed feeding of the fuel (4) over the width of the bearing surface (5).

6. Device according to Claim 1, **characterized in that** the fuel feed system (3) comprises a distributor tank, and the fuel supply openings are formed by multiple outlets of the distributor tank, which outlets are distributed over the width of the bearing surface.

7. Device according to Claim 1, **characterized in that** the at least one fuel introduction member (14) which is movable back and forth is formed by a displaceable feed shaft or by a displaceable conveying device.

8. Device according to Claim 1, **characterized in that** the fuel feed system (3) comprises at least one feed shaft (15), which is connected to a fill-level measuring device (16) for regulating the material height in the feed shaft (15).

9. Device according to Claim 1, **characterized in that** at least one measuring device (12) for monitoring the width and/or height of a layer of the fed fuel (4), which layer is being formed on the bearing surface (5) of the combustion chamber (2), is provided.

10. Device according to Claim 1, **characterized in that** the fuel feed system (3) comprises at least one dosing member (23, 24) for the dosed and/or distributed feeding of the fuel (4).

11. Device according to Claim 1, **characterized in that** the bearing surface (5) for the fuel (4) is at least 40 m² in size.

12. Device according to Claim 1, **characterized in that** the conversion capacity of the combustion chamber (2) is greater than 15 t of fuel per hour.

13. Device according to Claim 1, **characterized in that** the combustion chamber (2) comprises transport means for transporting the fuel or its residues over the bearing surface (5) and/or for discharging the residues of the fuel into the entrained-flow reactor (1) .

14. Method for the heat treatment of mineral material, wherein the mineral material is preheated, and/or calcined, in an entrained-flow reactor (1), and heat required for this purpose is generated at least partially in at least one combustion chamber (2) connected to the entrained-flow reactor (1) by conversion of fuel (4), wherein the fuel (4) is supplied via a fuel feed system (3) of the combustion chamber (2), and
the fuel (4) is introduced into the combustion chamber so as to be uniformly distributed over the width of a bearing surface via at least two fuel supply openings (9-11), which open out in the combustion chamber (2) so as to be spaced apart from one another, or at least one fuel introduction member (14), which is movable back and forth, of the combustion chamber (2).

15. Method according to Claim 14, **characterized in that** the fuel (4) is supplied to the at least two fuel supply openings (21, 22) so as to be dosed.

16. Method according to Claim 14, **characterized in that** the fuel (4) supplied via the fuel feed system (3) and/or a layer of fuel (4), which layer is being formed on a bearing surface (5) of the combustion chamber (2), are/is monitored by means of at least one measuring device (12), and use is made of a measurement value, determined by the at least one measuring device, for controlling the feeding of the fuel (4) for a uniform distribution of the fuel (4) over the width of the bearing surface (5).

## Revendications

1. Dispositif de traitement thermique de matière minérale, ledit dispositif comprenant un réacteur à flux entraîné (1) destiné à préchauffer et/ou calciner la matière minérale, au moins une chambre de combustion (2) pourvue d'une surface d'appui (5) destinée au combustible (4) étant raccordée au réacteur à flux entraîné (1), un système d'alimentation en combustible destiné à alimenter la chambre de combustion (2) en combustible (4) étant prévu pour distribuer uniformément le combustible sur la largeur de la surface d'alimentation, ledit système d'alimentation en combustible comportant au moins deux ouvertures d'alimentation en combustible espacées (9-11 ; 21,22) débouchant dans la chambre de combustion (2) ou au moins un élément d'entrée de combustible (14) à mouvement alternatif.

2. Dispositif selon la revendication 1, **caractérisé en ce que** le système d'alimentation en combustible (3) comporte un système de transport de combustible central (7) et au moins un élément de distribution (8) disposé en aval, l'au moins un élément de distribution (8) communiquant avec les au moins deux ouvertures d'alimentation en combustible espacées débouchant dans la chambre de combustion (2).

3. Dispositif selon la revendication 1, **caractérisé en ce que** la puissance de la chambre de combustion (2) est supérieure à 70 MW.

4. Dispositif selon la revendication 1, **caractérisé en ce que** le débit du réacteur à flux entraîné (1) est supérieur à 5 500 t de matière minérale par jour.

5. Dispositif selon la revendication 1, **caractérisé en ce que** le système d'alimentation en combustible (3) comporte des éléments de guidage destinés à délivrer le combustible (4) de manière distribuée sur la largeur de la surface d'appui (5).

6. Dispositif selon la revendication 1, **caractérisé en ce que** le système d'alimentation en combustible (3) comprend une boîte de distribution et les ouvertures d'alimentation en combustible sont formées par une pluralité de sorties de la boîte de distribution qui sont distribuées sur la largeur de la surface d'appui.

7. Dispositif selon la revendication 1, **caractérisé en ce que** l'au moins un élément d'entrée de combustible (14) à mouvement alternatif est formé par un arbre d'alimentation déplaçable ou un moyen de transport déplaçable.

8. Dispositif selon la revendication 1, **caractérisé en ce que** le système d'alimentation en combustible (3) comprend au moins un puits d'alimentation (15) qui est relié à un dispositif de mesure de niveau de remplissage (16) pour réguler la hauteur de matière dans le puits d'alimentation (15).

9. Dispositif selon la revendication 1, **caractérisé en ce que** au moins un dispositif de mesure (12) est prévu pour surveiller la largeur et/ou la hauteur d'une couche de combustible fourni (4) qui se forme sur la surface d'appui (5) de la chambre de combustion (2).

10. Dispositif selon la revendication 1, **caractérisé en ce que** le système d'alimentation en combustible (3) comprend au moins un élément de dosage (23, 24) destiné à l'alimentation dosée et/ou distribuée du combustible (4) .

11. Dispositif selon la revendication 1, **caractérisé en ce que** la surface d'appui (5) destinée au combustible (4) est d'au moins 40 m².

12. Dispositif selon la revendication 1, **caractérisé en ce que** la puissance de conversion de la chambre de combustion (2) est supérieure à 15 t de combustible par heure.

13. Dispositif selon la revendication 1, **caractérisé en ce que** la chambre de combustion (2) comporte des moyens de transport destinés à transporter le combustible ou ses résidus sur la surface d'appui (5) et/ou à évacuer les résidus du combustible dans le réacteur à flux entraîné (1).

14. Procédé de traitement thermique de matière minérale, la matière minérale étant préchauffée et/ou calcinée dans un réacteur à flux entraîné (1) et la chaleur nécessaire pour cela étant générée par conversion de combustible (4) au moins partiellement dans au moins une chambre de combustion (2) raccordée au réacteur à flux entraîné (1), le combustible (4) étant acheminé à la chambre de combustion (2) par le bais d'un système d'alimentation en combustible (3), et le combustible (4) étant introduit dans la chambre de combustion de manière uniformément distribuée sur la largeur d'une surface d'alimentation par le biais d'au moins deux ouvertures d'alimentation en combustible (9-11) débouchant à distance l'une de l'autre dans la chambre de combustion (2) ou d'au moins un élément d'entrée de combustible (14) à mouvement alternatif de la chambre de combustion (2).

15. Procédé selon la revendication 14, **caractérisé en ce que** le combustible (4) est acheminé de manière dosée aux au moins deux ouvertures d'alimentation en combustible (21, 22).

16. Procédé selon la revendication 14, **caractérisé en ce que** le combustible (4) fourni par le système d'alimentation en combustible (3) et/ou une couche de combustible (4) qui se forme sur une surface d'appui (5) de la chambre de combustion (2) est surveillés au moyen d'au moins un dispositif de mesure (12) et une valeur de mesure déterminée par l'au moins un dispositif de mesure est utilisée pour commander l'alimentation en combustible (4) en vue d'une distribution uniforme du combustible (4) sur la largeur de la surface d'appui (5).
